# EUROPÄISCHE PATENTANMELDUNG

(11) **EP 1 211 489 A2**
(43) Veröffentlichungstag der Anmeldung: **05.06.2002**
(21) Anmeldenummer: 01124416.7
(22) Anmeldetag: 11.10.2001
(51) Int. Cl.: G01F 3/08

(54) **Drehkolbenzähler**

(30) Priorität: 29.11.2000 DE 20020241 U
(71) Anmelder: DIGMESA AG, 2563 Ipsach (CH)
(72) Erfinder: Plüss, Heinz, 3322 Schönbühl (CH)
(74) Vertreter: Lempert, Jost, Dipl.-Phys. Dr. rer.nat.

(57) **Zusammenfassung**

Bei einem Durchflußmessgerät mit zwei in einer Messkammer eines Gehäuses in einer Wälzbewegung umlaufenden Verdrängerkörpern, die auf im wesentlichen parallelen Wellen sitzen und mittels kämmender Zahnräder zwangsgeführt sind, sind die Zahnräder zusammen mit den Verdrängerkörpern innerhalb der Messkammer angeordnet und die Wellen durchsetzen die Messkammer nicht.

## Beschreibung

Die Erfindung betrifft ein Durchflussmessgerät mit zwei in einer Messkammer eines Gehäuses in einer Wälzbewegung umlaufenden Verdrängerkörpern, die auf im wesentlichen parallelen Wellen sitzen und mittels kämmender Zahnräder zwangsgeführt sind.

Derartige Durchflussmessgeräte sind in Form von Drehkolbenzählern bekannt und werden zur Durchflussmessung von Fluiden, wie Flüssigkeiten und Gasen verwendet, wobei die Verdrängerkörper durch das die Messkammer durchströmende Fluid unmittelbar in eine Drehbewegung versetzt werden. Die Zahl der Umdrehungen wird als Maß für die durchgeflossene Fluidmenge verwendet.

Bei zweiwelligen Drehkolbenzählern wird durch den auf die Verdrängerkörper wirkenden Fluiddruck in jeder Stellung der Verdrängerkörper ein treibendes Drehmoment ausgeübt. Zweiwellige Drehkolbenzähler sind z.B. in Form von Ovalrad-, Drehkolbengas- und Schraubenspindelzählern bekannt, welche sich hauptsächlich durch die Form der Verdrängerkörper bzw. der Drehkolben unterscheiden. Während bei letztgenannten die Drehkolben schraubenförmig verwunden sind, wobei einer der Drehkolben ein konkaves und der andere ein konvexes Profil aufweist, sind Ovalradzähler mit ovalförmigen Drehkolben ausgestattet, die um 90° gegeneinander versetzt sind, so dass an ihre Berührungsstelle kein Gleiten auftritt und die Ovalräder aufeinander abrollen. Die Drehkolben von Drehkolbengaszählern sind von lemniskatenartiger Form und derart angeordnet, dass sie sich in jeder Stellung nahezu berühren.

Den genannten Drehkolbenzählern ist gemein, dass die um etwa 90° zueinander versetzte Lage ihrer Drehkolben durch außerhalb der Messkammer liegende kämmende Zahnräder bestimmt wird. Nachteilig hierbei ist, dass insbesondere die Lagerung der Verdrängerkörper aufwendig und teuer ist, da sie einerseits dicht, um einen Austritt des Fluids zu verhindern, und andererseits leichtgängig sein muss, um einen Druckverlust des Fluids zu vermeiden.

Der Erfindung liegt die Aufgabe zugrunde, ein Durchflussmessgerät vorzuschlagen, das bei einem einfachen und kostengünstigen Aufbau eine hohe Dichtigkeit und einen geringen Druckverlust des Fluids gewährleistet.

Erfindungsgemäß wird diese Aufgabe mit einem Durchflussmessgerät der eingangs genannten Art dadurch gelöst, dass die Zahnräder zusammen mit den Verdrängerkörpern innerhalb der Messkammer angeordnet sind und die Wellen die Messkammer nicht durchsetzen.

Durch die erfindungsgemäße Ausgestaltung der Lagerung und Führung der Verdrängerkörper mittels der Messkammer angeordneter kämmender Zahnräder werden Dichtigkeitsprobleme auf einfache und kostengünstige Weise vermieden, ohne dass die Messgenauigkeit eines derartigen Drehkolbenzählers negativ beeinflusst wird. Ein solcher Drehkolbenzähler ist z.B. in Form eines Ovalrad-, Drehkolbengas- oder Schraubenspindelzählers insbesondere zur Durchflussmessung viskoser Flüssigkeiten, wie Sirup, Öle oder Konzentrate für die chemische Industrie oder die Lebensmittelindustrie geeignet.

In äußerst bevorzugter Ausgestaltung ist vorgesehen, dass die Verdrängerkörper keulenartig ausgebildet sind, wobei insbesondere die Verdrängerkörper einen eingezogenen Mittelbereich und beidseitig desselben erweiterte Endbereiche aufweisen. Im bevorzugter Ausgestaltung kann dabei vorgesehen sein, dass die Verdrängerkörper zykloidenförmige Wandbereiche aufweisen bzw. dass die Verdrängerkörper Lemniskaten-Form haben. Bei einer derartigen Form der Verdrängerkörper ist eine große Beaufschlagungsfläche gegeben, die eine große Kraftübertragung und im Ergebnis eine höhere Genauigkeit der Messung bedingt, als dies bei anderem, auch den o.g. Verdrängerkörpern der Fall ist.

In einer bevorzugten Ausführungsform sind die Wellen einseitig in Sattellöchern der Messkammer gelagert. An dem dem jeweiligen Sattelloch abgewandten Ende können die Wellen beispielsweise mittels einer Deckelscheibe fixierbar sein, so dass die Messkammer auf einfache Weise gereinigt werden kann, indem die Deckelscheibe abgenommen und die Wellen mit den Zahnrädern und den Verdrängerkörpern der Messkammer entnommen werden.

In weiterhin bevorzugter Ausführung ist ein berührungsloser Messwertaufnehmer (Sensor) zur Erfassung des Durchflusses vorgesehen. Hierzu kann zumindest ein Verdrängerkörper wenigstens einen exzentrisch angeordneten Permanentmagneten zur Abtastung der Durchflussmessung aufweisen. Messwertaufnahme kann durch einen Hall-Sensor oder auch Reed-Kontakte erfolgen. Derart kann eine Messeinrichtung zum Erfassen der Anzahl der Umdrehungen der Verdrängerkörper, welche als Maß für die durchgeflossenen Fluidmenge gezählt wird, vorgesehen sein, die außerhalb der Messkammer angeordnet und nicht mechanisch mit den Wellen der Verdrängerkörper verbunden ist. Der Drehkolbenzähler kann somit von modulartigem Aufbau mit getrennt voneinander austauschbarer Messkammer und Messeinrichtung sein.

Nachstehend ist die Erfindung anhand einer bevorzugten Ausführungsform unter Bezugnahme auf die Zeichnungen im einzelnen erläutert. Dabei zeigen:
- Fig. 1: eine Draufsicht auf eine Messkammer eines erfindungsgemäßen Drehkolbenzählers, und
- Fig. 2: einen Längsschnitt A-A gemäß der Fig. 1.

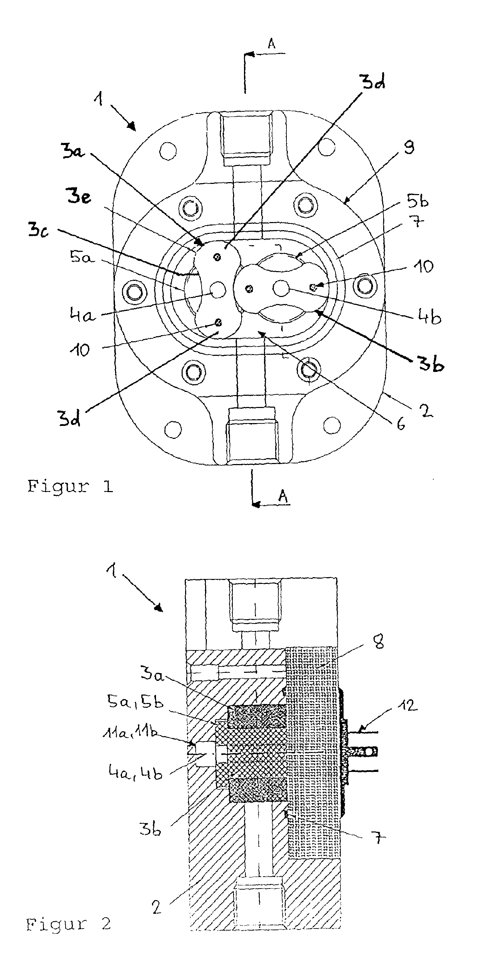

Der in Fig. 1 dargestellte Drehkolbenzähler 1 weist eine in einem Gehäuse 2 angeordnete Messkammer 6 mit zwei ineinandergreifenden lemniskatenförmigen Verdrängerkörpern 3a,3b auf.

Die Verdrängerkörper 3a,3b sitzen auf parallelen Wellen 4a,4b und sind mittels drehfest mit diesen verbundenen Zahnrädern 5a,5b in einer um etwa 90° zueinander versetzten Lage zwangsgeführt. Die Verdrängerkörper weisen dabei einen eingezogenen Mittelbereich 3c und erweiterte Endbereiche 3d auf, deren Stirnseiten im wesentlichen teil-kreisförmig ausgebildet sind.

Sowohl die Wellen 4a,4b als auch die Zahnräder 5a,5b sind zur Gänze innerhalb der Messkammer 6 angeordnet, um Dichtigkeitsprobleme zu vermeiden. Die Konturen von eingezogenem Mittelbereich 3c und Stirnseiten 3d der Verdrängerkörper 3a,3b sind derart, dass die Stirnseiten 3d bei Drehbewegung der Verdrängerkörper an den Einschnürungsbereichen 3c eine Wälzbewegung ausführen.

Die Verdrängerkörper 3a,3b sind jeweils mit zwei exzentrisch angeordneten Permanentmagneten 10 versehen, die eine Abtastung der Durchflussmessung mittels einer außerhalb der Messkammer 6 angeordneten (nicht dargestellten) Messeinrichtung ermöglichen, indem diese die Anzahl der Umdrehungen der Verdrängerkörper 3a,3b erfasst. Die Messkammer 6 weist stirnseitig einen von einem Dichtungsring 7 abgedichteten Sitz 9 einer Deckelscheibe auf.

Wie aus Fig. 2 ersichtlich, sind die Wellen 4a,4b einseitig gelagert und mit je einem endständigen Bund in innenseitig der Messkammer 6 angeordnete Sattellöcher 11a,11b eingesteckt. In der gezeigten Ausführungsform sind die Wellen 4a,4b an ihren den Sattellöchern 11a,11b abgewandten Enden mittels einer auf dem Sitz 9 (vergleiche Fig. 1) befestigten Deckelscheibe 8 axial gesichert. Auf diese Weise kann die Messkammer 6 z.B. auf einfache Weise dadurch gereinigt werden, dass die Deckelscheibe 8 abgenommen und die Wellen 4a,4b mit den Zahnrädern 5a,5b und den Verdrängerkörpern 3a,3b der Messkammer 6 entnommen werden.

Außenseitig des Gehäuses 2 ist eine nicht mechanisch mit den Wellen 4a,4b verbundene Messeinrichtung in Form einer Induktionsspule oder andere Impulsgeber 12 zum Erfassen der Anzahl der Umdrehungen der Verdrängerkörper 3a,3b angeordnet.

## Patentansprüche

1. Durchflussmessgerät (1) mit zwei in einer Messkammer (6) eines Gehäuses (2) in einer Wälzbewegung umlaufenden Verdrängerkörpern (3a,3b), die auf im wesentlichen parallelen Wellen (4a,4b) sitzen und mittels kämmender Zahnräder (5a,5b) zwangsgeführt sind, **dadurch gekennzeichnet, dass** die Zahnräder (5a,5b) zusammen mit den Verdrängerkörpern (3a,3b) innerhalb der Messkammer (6) angeordnet sind und die Wellen (4a,4b) die Messkammer (6) nicht durchsetzen.

2. Durchflussmessgerät nach Anspruch 1, **dadurch gekennzeichnet, dass** die Verdrängerkörper keulenartig ausgebildet sind.

3. Durchflussmessgerät nach einem der Ansprüche 1 oder 2, **dadurch gekennzeichnet, dass** die Verdrängerkörper einen eingezogenen Mittelbereich (3c) und beidseitig desselben erweiterte Endbereiche (3d) aufweisen.

4. Vorrichtung nach einem der Ansprüche 1 bis 3, **dadurch gekennzeichnet, dass** die Verdrängerkörper zykloidenförmige Wandbereiche aufweisen.

5. Durchflussmessgerät nach einem der Ansprüche 1 bis 4, **dadurch gekennzeichnet, dass** die Verdrängerkörper Lemniskaten-Form haben.

6. Durchflussmessgerät nach einem der Ansprüche 1 oder 5, **dadurch gekennzeichnet, dass** die Wellen (4a,4b) einseitig in Sattellöchern (11a,11b) der Messkammer (6) gelagert sind.

7. Durchflussmessgerät nach einem der Ansprüche 1 bis 6, **gekennzeichnet durch** einen berührungslosen Messwertaufnehmer.
